# EUROPEAN PATENT APPLICATION

(11) **EP 4 679 842 A1**
(43) Date of publication of application: **14.01.2026**
(21) Application number: 24777687.5
(22) Date of filing: 08.03.2024
(51) Int. Cl.: H04N 21/4402

(54) **VIDEO TRANSMISSION METHOD AND APPARATUS, STORAGE MEDIUM, AND SYSTEM**

(30) Priority: 31.03.2023 CN 202310362924
(71) Applicant: Huawei Technologies Co., Ltd., Shenzhen, Guangdong 518129 (CN)
(72) Inventor: LUO, Daxin, Shenzhen, Guangdong 518129 (CN); ZHANG, Hui, Shenzhen, Guangdong 518129 (CN); MA, Sha, Shenzhen, Guangdong 518129 (CN)
(74) Representative: Isarpatent
(86) International application number: PCT/CN2024/080842
(87) International publication number: WO 2024/198897

(57) **Abstract**

Provided are a video transmission method and apparatus, a storage medium, and a system. The method includes: performing decoding processing on M first video frames from a second apparatus to obtain M second video images, where the first video frame is obtained through compression coding processing on a first video image based on a first compression parameter, the first video image belongs to a first video stream, and M is an integer greater than or equal to 1; predicting, based on content of the M second video images, a second compression parameter corresponding to a key image block that is included in a third video image, where capture time of the third video image is later than capture time of the first video image; and sending the second compression parameter to the second apparatus, where the second compression parameter is used to perform compression coding processing on an image block that is included in the third video image. In a video transmission scenario with a high requirement for real-time transmission, this method helps ensure video quality to a maximum extent while satisfying a network transmission requirement and a low-latency condition.

## Description

### CROSS-REFERENCE TO RELATED APPLICATIONS

This application claims priority to Chinese Patent Application No. 202310362924.5, filed with the China National Intellectual Property Administration on March 31, 2023 and entitled "VIDEO TRANSMISSION METHOD AND APPARATUS, STORAGE MEDIUM, AND SYSTEM", which is incorporated herein by reference in its entirety.

### TECHNICAL FIELD

This application relates to the field of media transmission technologies, and in particular, to a video transmission method and apparatus, a storage medium, and a system.

### BACKGROUND

Currently, in the field of Internet of Vehicles technologies, when a vehicle supports an autonomous driving function, in an autonomous driving process, the vehicle captures an image of an environment around the vehicle by using an in-vehicle camera, transmits the environmental image to an in-vehicle processor (for example, an autonomous driving system) in a wired manner for processing, and displays a processed environmental image on an in-vehicle display screen, to provide driving assistance for a driver of the vehicle. Because a large quantity of cables cause difficulty in vehicle network cabling and increase an overall weight of the vehicle, a development trend of the Internet of Vehicles technologies and the autonomous driving technologies is to transmit, in a wireless short-range communication manner, the environmental image captured by the in-vehicle camera.

However, the wireless short-range communication manner faces problems including transmission channel fluctuation and instability. These problems are specifically manifested by network bandwidth change, transmission latency fluctuation, packet loss, and the like. When a video stream (including a plurality of video images) is transmitted under a same circumstance, channel fluctuation and instability causes packet loss and slowed transmission of the video stream. Consequently, a receive end (for example, the autonomous driving system) cannot receive correct image information, and a video output on the display screen may be subject to freezing, mosaic, or the like.

Therefore, an important issue to be urgently addressed is still how to ensure video quality to a maximum extent while satisfying a network transmission requirement and a low-latency condition in a scenario with a high requirement for real-time transmission such as autonomous driving.

### SUMMARY

Embodiments of this application provide a video transmission method and apparatus, a storage medium, and a system, to ensure video quality to a maximum extent while satisfying a network transmission requirement and a low-latency condition in a video transmission scenario with a high requirement for real-time transmission.

According to a first aspect, an embodiment of this application provides a video transmission method. The method may be applied to a first apparatus, and the first apparatus may be a receive end. The method may include: performing decoding processing on M first video frames from a second apparatus to obtain M second video images, where the first video frame is obtained through compression coding processing on a first video image based on a first compression parameter, the first video image belongs to a first video stream, and M is an integer greater than or equal to 1; predicting, based on content of the M second video images, a second compression parameter corresponding to a key image block that is included in a third video image, where capture time of the third video image is later than capture time of the first video image; and sending the second compression parameter to the second apparatus, where the second compression parameter is used to perform compression coding processing on an image block that is included in the third video image.

With reference to the first aspect, in an optional implementation, predicting, based on the content of the M second video images, the second compression parameter corresponding to the key image block that is included in the third video image includes: determining, in an inverse selection manner, a first image block from image blocks that are included in the M second video images; and predicting, based on content of the first image block, the second compression parameter corresponding to the key image block that is included in the third video image.

With reference to the first aspect, in an optional implementation, determining, in the inverse selection manner, the first image block from the image blocks that are included in the M second video images includes: determining a second image block from the image blocks that are included in the M second video images, where a first value corresponding to the second image block is greater than or equal to a first threshold, a second value corresponding to the first image block is less than or equal to a second threshold, the first value represents credibility of accurately identifying an object in the first image block, and the second value represents a degree of impact of the object in the first image block on safe driving of a vehicle; and using an image block other than the second image block in the M second video images as the first image block.

With reference to the first aspect, in an optional implementation, predicting, based on the first image block, the second compression parameter corresponding to the key image block that is included in the third video image includes: providing the first image block as input information for a first neural network model; and predicting, through the first neural network model, the second compression parameter corresponding to the key image block that is included in the third video image.

With reference to the first aspect, in an optional implementation, predicting, based on the first image block, the second compression parameter corresponding to the key image block that is included in the third video image includes: providing the first image block and information about a wireless communication channel between the second apparatus and the first apparatus as input information for the first neural network model; and predicting, through the first neural network model, the second compression parameter corresponding to the key image block that is included in the third video image.

With reference to the first aspect, in an optional implementation, the method may further include: obtaining, through a second neural network model, a quality parameter of a second video stream corresponding to the M second video images; and predicting, based on the first image block, the second compression parameter corresponding to the key image block that is included in the third video image includes: providing the first image block, the information about the wireless communication channel between the second apparatus and the first apparatus, and the quality parameter of the second video stream as input information for the first neural network model; and predicting, through the first neural network model, the second compression parameter corresponding to the key image block that is included in the third video image.

With reference to the first aspect, in an optional implementation, obtaining, through the second neural network model, the quality parameter of the second video stream corresponding to the M second video images includes: selecting N image blocks from each second video image based on a gradient value of each first image block in the M second video images; and providing a space-time slice matrix including M*N image blocks as input information for the second neural network model, to obtain the quality parameter of the second video stream corresponding to the M second video images.

With reference to the first aspect, in an optional implementation, the method may further include: computing the gradient value of each first image block in the M second video images by using an image edge detection operator.

With reference to the first aspect, in an optional implementation, the second apparatus includes an in-vehicle camera apparatus, and the first apparatus includes an autonomous driving system.

According to a second aspect, an embodiment of this application provides a video transmission method, applied to a second apparatus. The method may include: performing, based on a first compression parameter, compression coding processing on M first video images that are included in a first video stream, to obtain a second video stream, where the second video stream includes M first video frames; sending the second video stream to a first apparatus; and receiving a second compression parameter from the second apparatus, where the second compression parameter is used to perform compression coding processing on an image block that is included in a third video image, and capture time of the third video image is later than capture time of the first video image.

With reference to the second aspect, in an optional implementation, the method may further include: performing, based on the second compression parameter, compression coding processing on the image block that is included in the third video image to obtain a fourth video stream; and sending the fourth video stream to the first apparatus.

According to a third aspect, an embodiment of this application provides a video transmission apparatus, including: a decoding unit, configured to perform decoding processing on M first video frames from a second apparatus to obtain M second video images, where the first video frame is obtained through compression coding processing on a first video image based on a first compression parameter, the first video image belongs to a first video stream, and M is an integer greater than or equal to 1; a prediction unit, configured to predict, based on content of the M second video images, a second compression parameter corresponding to a key image block that is included in a third video image, where capture time of the third video image is later than capture time of the first video image; and a transceiver unit, configured to send the second compression parameter to the second apparatus, where the second compression parameter is used to perform compression coding processing on an image block that is included in the third video image.

With reference to the third aspect, in an optional implementation, predicting, based on the content of the M second video images, the second compression parameter corresponding to the key image block that is included in the third video image includes: determining, in an inverse selection manner, a first image block from image blocks that are included in the M second video images; and predicting, based on content of the first image block, the second compression parameter corresponding to the key image block that is included in the third video image.

With reference to the third aspect, in an optional implementation, determining, in the inverse selection manner, the first image block from the image blocks that are included in the M second video images includes: determining a second image block from the image blocks that are included in the M second video images, where a first value corresponding to the second image block is greater than or equal to a first threshold, a second value corresponding to the first image block is less than or equal to a second threshold, the first value represents credibility of accurately identifying an object in the first image block, and the second value represents a degree of impact of the object in the first image block on safe driving of a vehicle; and using an image block other than the second image block in the M second video images as the first image block.

With reference to the third aspect, in an optional implementation, predicting, based on the first image block, the second compression parameter corresponding to the key image block that is included in the third video image includes: providing the first image block as input information for a first neural network model; and predicting, through the first neural network model, the second compression parameter corresponding to the key image block that is included in the third video image.

With reference to the third aspect, in an optional implementation, predicting, based on the first image block, the second compression parameter corresponding to the key image block that is included in the third video image includes: providing the first image block and information about a wireless communication channel between the second apparatus and the first apparatus as input information for the first neural network model; and predicting, through the first neural network model, the second compression parameter corresponding to the key image block that is included in the third video image.

With reference to the third aspect, in an optional implementation, the prediction unit is specifically configured to: obtain, through a second neural network model, a quality parameter of a second video stream corresponding to the M second video images; and predicting, based on the first image block, the second compression parameter corresponding to the key image block that is included in the third video image includes: providing the first image block, the information about the wireless communication channel between the second apparatus and the first apparatus, and the quality parameter of the second video stream as input information for the first neural network model; and predicting, through the first neural network model, the second compression parameter corresponding to the key image block that is included in the third video image.

With reference to the third aspect, in an optional implementation, obtaining, through the second neural network model, the quality parameter of the second video stream corresponding to the M second video images includes: selecting N image blocks from each second video image based on a gradient value of each first image block in the M second video images; and providing a space-time slice matrix including M*N image blocks as input information for the second neural network model, to obtain the quality parameter of the second video stream corresponding to the M second video images.

With reference to the third aspect, in an optional implementation, the prediction unit is further configured to: compute the gradient value of each first image block in the M second video images by using an image edge detection operator.

With reference to the third aspect, in an optional implementation, the second apparatus includes an in-vehicle camera apparatus, and the first apparatus includes an autonomous driving system.

According to a fourth aspect, an embodiment of this application provides a video transmission apparatus, including: an encoding unit, configured to perform, based on a first compression parameter, compression coding processing on M first video images that are included in a first video stream, to obtain a second video stream, where the second video stream includes M first video frames; and a transceiver unit, configured to send the second video stream to a first apparatus; and receive a second compression parameter from the second apparatus, where the second compression parameter is used to perform compression coding processing on an image block that is included in a third video image, and capture time of the third video image is later than capture time of the first video image.

With reference to the fourth aspect, in an optional implementation, the encoding unit is further configured to: perform, based on the second compression parameter, compression coding processing on the image block included in the third video image to obtain a fourth video stream; and the transceiver unit is further configured to send the fourth video stream to the first apparatus.

According to a fifth aspect, an embodiment of this application provides a communication apparatus, including at least one processor and an interface circuit. The interface circuit is configured to provide data or code instructions for the at least one processor, and the at least one processor is configured to implement the method according to any one of the first aspect and the possible designs of the first aspect or the method according to any one of the second aspect and the possible designs of the second aspect by using a logic circuit or by executing the code instructions.

According to a sixth aspect, an embodiment of this application provides a communication system, including a video transmission apparatus configured to implement the method according to any one of the first aspect and the possible designs of the first aspect, and a video transmission apparatus configured to implement the method according to any one of the second aspect and the possible designs of the second aspect.

According to a seventh aspect, an embodiment of this application provides a computer-readable storage medium. The computer-readable storage medium stores program code. When the program code is run on a computer, the computer is enabled to perform the method according to any one of the first aspect and the possible designs of the first aspect; or when the program code is run on a computer, the computer is enabled to perform the method according to any one of the second aspect and the possible designs of the second aspect.

According to an eighth aspect, an embodiment of this application provides a computer program product. When the computer program product is run on a computer, the computer is enabled to perform the method according to any one of the first aspect and the possible designs of the first aspect or perform the method according to any one of the second aspect and the possible designs of the second aspect.

According to a ninth aspect, an embodiment of this application provides a terminal device, including units configured to implement the method according to any one of the first aspect and the possible designs of the first aspect, or units configured to implement the method according to any one of the second aspect and the possible designs of the second aspect. In an example, the terminal device includes but is not limited to: an intelligent transportation device (for example, an automobile, a ship, an uncrewed aerial vehicle, a train, and a truck), an intelligent manufacturing device (for example, a robot, an industrial device, smart logistics, and a smart factory), and an intelligent terminal (a mobile phone, a computer, a tablet, a palmtop computer, a desktop computer, a headset, a speaker, a wearable device, an in-vehicle device, and the like).

Based on the implementations provided in the foregoing aspects, embodiments of this application may be further combined to provide more implementations.

### BRIEF DESCRIPTION OF DRAWINGS

FIG. 1 is an example diagram of an application scenario of a video compression technology;
FIG. 2 is an example diagram of an application scenario of an adaptive bit rate streaming technology;
FIG. 3 is a diagram of a communication system according to an embodiment of this application;
FIG. 4 is a schematic flowchart of a video transmission method according to an embodiment of this application;
FIG. 5 is a schematic flowchart of a video transmission method according to an embodiment of this application;
FIG. 6 is an example diagram of encoding principles according to an embodiment of this application;
FIG. 7 is a schematic flowchart of a video transmission method according to an embodiment of this application;
FIG. 8 is a schematic flowchart of a video quality assessment method according to an embodiment of this application;
FIG. 9 is a diagram of a video transmission apparatus according to an embodiment of this application;
FIG. 10 is a diagram of another video transmission apparatus according to an embodiment of this application; and
FIG. 11 is a diagram of a communication device according to an embodiment of this application.

### DESCRIPTION OF EMBODIMENTS

To make the objectives, technical solutions, and advantages of embodiments of this application clearer, the following describes embodiments of this application in detail with reference to the accompanying drawings. Terms used in embodiments of this application are merely used to explain specific embodiments of this application, but are not intended to limit this application. It is clear that the described embodiments are merely some rather than all of embodiments of this application. All other embodiments obtained by a person of ordinary skill in the art based on embodiments of this application without creative efforts shall fall within the protection scope of this application.

Before specific solutions provided in embodiments of this application are described, some terms in this application are generally explained and described, to facilitate understanding of a person skilled in the art. The terms in this application are not limited.
(1) Image signal processor (image signal processor, ISP): a device that processes an output signal of a front-end image sensor to match image sensors from different vendors.
   ISPs used by cameras that are provided by different vendors are not the same. Generally, an ISP image processing pipeline (pipeline) may be obtained by combining the following modules: a demosaicing module, a black level correction module, a lens correction module, a bad pixel correction module, a Gamma correction module, a noise reduction module, a white balance module, a color mapping module, and the like. Parameters of these modules used by the ISPs of different cameras are also different, and details are not described herein.
(2) Video quality assessment (video quality assessment, VQA): Its purpose is to design a set of algorithms to automatically evaluate video quality. Based on the algorithms, the video quality does not need to be determined manually. VQA can be used to automatically monitor the video quality and analyze a large-scale data set. Generally, the video quality can be evaluated from a plurality of dimensions, such as definition, color, and mosaic.
(3) Video compression (Video compression): It uses a data compression technology to remove redundant information from digital video data to reduce an amount of data required to represent an original video, thereby facilitating video data transmission and storage. The amount of original video data is usually too large. For example, a bit rate of uncompressed television quality video data is up to 216 Mbps, and most applications (applications, APPs) cannot process such a huge amount of data. Therefore, video compression is necessary.

Currently, commonly used video encoding standards include H.264/AVC and H.265/HEVC proposed by the Joint Video Team (Joint Video Team, JVT) that is jointly formed by the Video Code Expert Group (Video Code Expert Group, VCEG) under the International Telecommunication Union and the Motion Picture Expert Group (Motion Picture Expert Group, MPEG) under the International Organization for Standardization.

Video compression usually includes a set of encoders and decoders. The encoder converts original video data into a compressed format for transmission and storage. The decoder is a representation of converting a compressed form back into video data. A pair of encoders and decoders is usually called a codec.

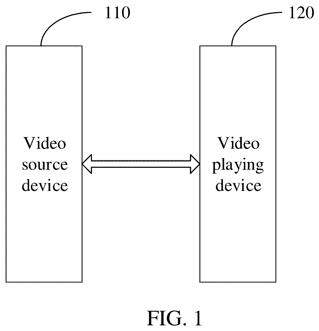

FIG. 1 is an example diagram of an application scenario of a video compression technology. The application scenario may be considered as a video transmission system. As shown in FIG. 1, the video transmission system includes a video source device 110 and a video playing device 120. The video playing device may be understood as a destination device.

The video source device 110 is configured to obtain a video, encode the video, and provide encoded data to the video playing device 120. The video playing device 120 is configured to decode the obtained encoded data, and output a video image that is obtained through decoding to a display device (for example, an in-vehicle display screen) for playing.

The video source device 110 may include or may be any type of image capture device configured to capture a real-world image, or any type of image generation device. For example, the video source device 110 may be an in-vehicle camera, or the video source device 110 may include, for example, a computer graphics processing unit configured to generate a computer animation image. Alternatively, for example, the video source device 110 may include any type of device configured to: obtain a real-world image, or provide a computer-generated VR image, or provide an AR image that combines a real-world image and a virtual image.

In some embodiments, the video source device 110 may directly send the encoded data to the video playing device 120 after encoding the video. For example, the video source device 110 may communicate with the video playing device 120 in a wired communication manner or a wireless communication manner. In some other embodiments, the video source device 110 may store the encoded data into a storage device after encoding the video, and then the video playing device 120 obtains the encoded data from the storage device. This is not limited in embodiments of this application.

However, if the video source device 110 communicates with the video playing device 120 in a wireless communication manner, cases such as channel fluctuation and instability described in the Background may exist. As a result, a receive end cannot receive correct image information, causing freezing, mosaic, or the like of the video.

A common solution to this problem is to use a channel-adaptive video stream. Video streams having different pixel sizes and different compression rates have quite different sizes. The more pixels, the lower the compression rate and the clearer the video image, but the larger the video size. Therefore, a transmit end of the video can ensure that a video stream is transmitted in an optimal manner by continuously adjusting a pixel and a compression rate of the video stream according to a network channel condition (for example, network bandwidth). For example, when the channel condition is poor, the compression rate is increased, a quantity of pixels is reduced, and the video is transmitted with a small amount of data. Although definition is lost to some extent, freezing, mosaic, or the like of the video can be avoided.

(4) Adaptive bit rate streaming (adaptive bit rate streaming, ABR) algorithm: It is a video transmission technology, which can automatically adjust a bit rate in a process of transmission of a video stream. This technology is commonly used on a video playing website or an online video client. The client properly adjusts the bit rate automatically based on a channel environment change or a size of content in a buffer, to improve quality of experience (quality of experience, QoE) of a user who is watching a video online.

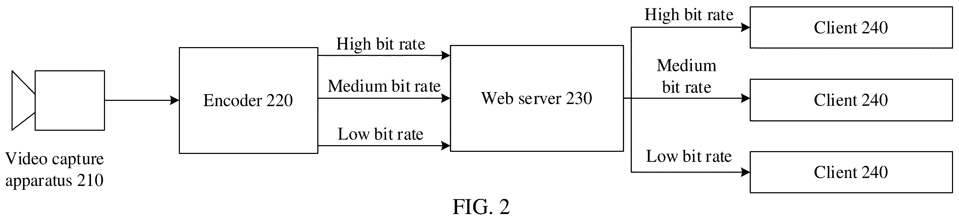

FIG. 2 is an example diagram of an application scenario of an adaptive bit rate streaming technology. The application scenario may be considered as a video transmission system. As shown in FIG. 2, the video transmission system may include a video capture apparatus 210, an encoder 220, a web server 230, and at least one client 240.

The video capture apparatus 210 may be configured to capture an original video. A video provider may store the original video with different resolutions by using the encoder 220, compress the original video at different bit rates (for example, any one of a high bit rate, a medium bit rate, or a low bit rate), to obtain videos of different file sizes, and further provide the videos to the web server 230. When playing a video, the client 240 (for example, a video player) fetches videos of different file sizes from the web server 230 according to a bandwidth condition or a cache condition of the client 240, to ensure video quality as much as possible while ensuring smooth video playing.

The foregoing adaptive solution is applicable to a video playing scenario with a low requirement for real-time transmission. For example, on a video playing website, a user client may allow a latency of a received video to be several seconds to dozens of seconds, without affecting a video experience effect.

However, in some video playing scenarios in which there is a high requirement for real-time transmission, for example, in an autonomous driving system of the Internet of Vehicles, a requirement for a low latency of video transmission is high, and the latency is generally required to be at a level of milliseconds. An end-to-end latency of the ABR technology is several seconds. This latency is long. Even an optimized ABR technology applied to a live streaming scenario has a latency of two seconds or more, which cannot satisfy a requirement of an autonomous driving scenario or the like.

In addition, the ABR technology encodes a video in a plurality of manners and stores corresponding encoding results to satisfy requirements of users for different bit rates. Therefore, due to the plurality of encoding manners, a total amount of computing is a plurality of times an amount of computing of single encoding. The amount of computing is large, a requirement for storage resources is high, and a requirement for storage resources of a hard disk increases accordingly.

Therefore, how to ensure video quality in a scenario with a high requirement for real-time transmission such as autonomous driving is still an important issue that needs to be urgently resolved.

Embodiments of this application provide a video transmission method and apparatus, a storage medium, and a system, to ensure video quality to a maximum extent while satisfying a network transmission requirement and a low-latency condition in a video transmission scenario with a high requirement for real-time transmission. The method and the apparatus are based on a same technical concept. Because problem-resolving principles of the method and the apparatus are similar, mutual reference may be made to implementations of the apparatus and the method, and repeated parts are not described again. In addition, in embodiments of this application, unless otherwise stated or there is a logic conflict, terms and/or descriptions between embodiments are consistent and may be mutually referenced, and technical features in different embodiments may be combined based on an internal logical relationship thereof, to form a new embodiment.

It should be noted that, in embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be singular or plural.

Unless otherwise specified, ordinal numbers such as "first" and "second" mentioned in embodiments of this application are used to distinguish between a plurality of objects, but are not used to limit priorities or importance degrees of the plurality of objects. For example, a first video image and a second video image are merely used to distinguish between different video images, but are not used to indicate different priorities, importance degrees, or the like of the two video images.

For ease of understanding, the following provides detailed description with reference to the accompanying drawings and embodiments by using an example in which an autonomous driving scenario serves as a video transmission scenario with a high requirement for real-time transmission.

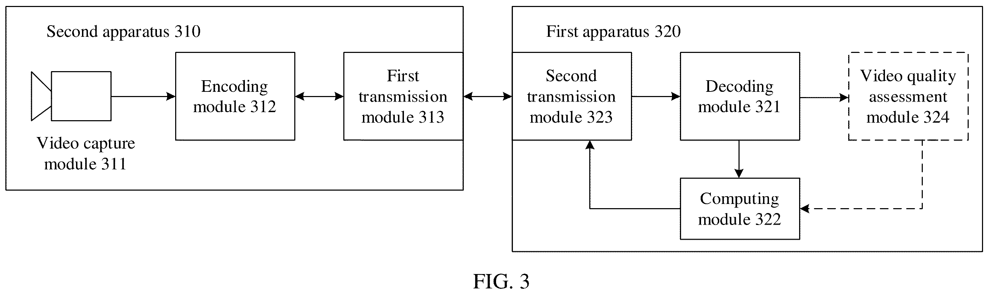

FIG. 3 is a diagram of a communication system according to an embodiment of this application.

As shown in FIG. 3, the system may include a second apparatus 310 and a first apparatus 320. The second apparatus 310 may serve as the video source device (or referred to as a transmit end) shown in FIG. 1. The first apparatus 320 may serve as the video playing device (or referred to as a receive end) shown in FIG. 1. Video transmission may be performed between the second apparatus 310 and the first apparatus 320 in a wired communication manner or a wireless communication manner. For example, the wireless communication manner may include a wireless short-range communication manner, including but not limited to, a Bluetooth communication manner and a SparkLink communication manner.

The second apparatus 310 may include a video capture module 311, an encoding module 312, and a first transmission module 313.

The video capture module 311 may be implemented as a camera or an image sensor of another type, and is configured to collect an original video stream (for example, represented as a first video stream) in real time. The first video stream may include a plurality of first video images.

A video compression technology used by the encoding module 312 may include but is not limited to the H.264/AVC, H.265/HEVC, and the like described previously. The encoding module 312 may be configured to perform, based on a first compression parameter, compression coding processing on the plurality of first video images that are included in the first video stream from the video capture module 311, to obtain a second video stream. The second video stream may include a plurality of first video frames, where the plurality of first video frames are obtained through compression processing on the plurality of first video images. It should be understood that, in embodiments of this application, the terms "picture (picture)", "frame (frame)", and "image (image)" may serve as synonyms; and a "video image", a "video frame", and a "video picture" included in a video stream may also serve as synonyms. They are not differentiated and not detailed again in the following description.

The first transmission module 313 may support a wired communication manner or a wireless communication manner, and may send the second video stream from the encoding module 312 to the first apparatus 320. For example, the wireless communication manner may include a wireless short-range communication manner, such as the Bluetooth communication manner or the SparkLink communication manner.

The first apparatus 320 may include a decoding module 321, a computing module 322, and a second transmission module 323.

The second transmission module 323 may receive the second video stream from the first transmission module 313, and provide the second video stream for the decoding module.

The decoding module 321 may perform decoding processing on the plurality of first video frames that are included in the second video stream, to obtain the plurality of second video images. In the following description, for ease of description, M may be used to represent a quantity of first video frames included in the second video stream. M is an integer greater than or equal to 1. Accordingly, a quantity of second video images obtained through the decoding is also M.

The computing module 322 may predict, based on content of the M second video images, a second compression parameter corresponding to a key image block of a third video image that is included in a subsequent to-be-transmitted third video stream. Capture time of the third video image that is included in the third video stream is later than capture time of the first video image. During prediction processing, the computing module 322 may determine, in an inverse selection (inverse selection for short) manner, a first image block from image blocks that are included in the M second video images. The first image block is a key image block (or referred to as a salient region) included in the second video image. The computing module 322 may predict, with reference to quality of the first image block and a channel condition (for example, network bandwidth) of a transmission channel corresponding to the first image block, the second compression parameter corresponding to the key image block that is included in the third video image.

The computing module 322 may send the second compression parameter to the second apparatus 310 through communication interaction between the second transmission module 323 and the first transmission module 313.

The first transmission module 313 may receive the second compression parameter from the second transmission module 323, and provide the second compression parameter for the encoding module 312.

Subsequently, when obtaining the third video stream collected by the video capture module 311, the encoding module 312 may perform, by using the second compression parameter, compression coding processing on the third video image that is included in the third video stream, and then send an obtained fourth video stream to the first apparatus 320. The capture time of the third video image is later than the capture time of the first video image, the fourth video stream includes a plurality of second video frames, and the plurality of second video frames are obtained through compression processing on a plurality of third video images.

In this way, the second apparatus 310 and the first apparatus 320 may perform communication interaction with each other by using the foregoing method, and the first apparatus 320 serving as the receive end selects the salient region in the image in the inverse selection manner, thereby improving detection precision of the salient region and avoiding a problem that it is difficult to exhaustively enumerate and extract a plurality of categories of features. In addition, compression parameters of different image regions are adaptively adjusted based on the content of the received video image, to attain an objective of refined compression on the image and reduce freezing, mosaic, or the like while satisfying a network transmission requirement and a low-latency condition, thereby ensuring video quality to a maximum extent.

In an optional implementation, the first apparatus 320 may further include a video quality assessment module 324. The video quality assessment module 324 may selectively extract (for example, extract based on a time dimension) some images from the M second video images and extract (for example, extract based on a spatial dimension) some image blocks from each extracted video image; and assess, based on content of the extracted image blocks, quality of the entire second video stream obtained by the first apparatus 320. A corresponding video quality parameter may be on a human-machine interface (Human Machine Interface, HMI) associated with the first apparatus 320, so that a user on the HMI side may perform a subsequent operation with reference to the video quality parameter, for example, quickly locate a camera problem. Alternatively, the video quality assessment module 324 may further provide the video quality parameter for the computing module 322, so that the computing module 322 may adjust the second compression parameter by using the video quality parameter, thereby further ensuring quality of a subsequent to-be-transmitted video stream.

It is worth noting that, in this embodiment of this application, in an optional implementation, as shown in FIG. 3, the video quality assessment module 324 may be a module independent of the computing module 322. The video quality assessment module 324 may be configured to assess quality of partial or all content of the video stream obtained by the decoding module 321, and may provide the obtained quality parameter for the computing module 322, so that the computing module 322 uses the obtained video quality parameter as reference or supplementary information, to adaptively compute compression parameters of different image regions. Alternatively, in another optional implementation, the video quality assessment module 324 and the computing module 322 may be integrated into one module, which is configured to assess quality of partial or all content of the video stream obtained by the decoding module 321, and adaptively compute compression parameters of different image regions with reference to the obtained video quality parameter. A product form of the video quality assessment module 324 is not limited in this embodiment of this application.

For ease of understanding, the following describes functions of the modules shown in FIG. 3 in detail with reference to a method flowchart.

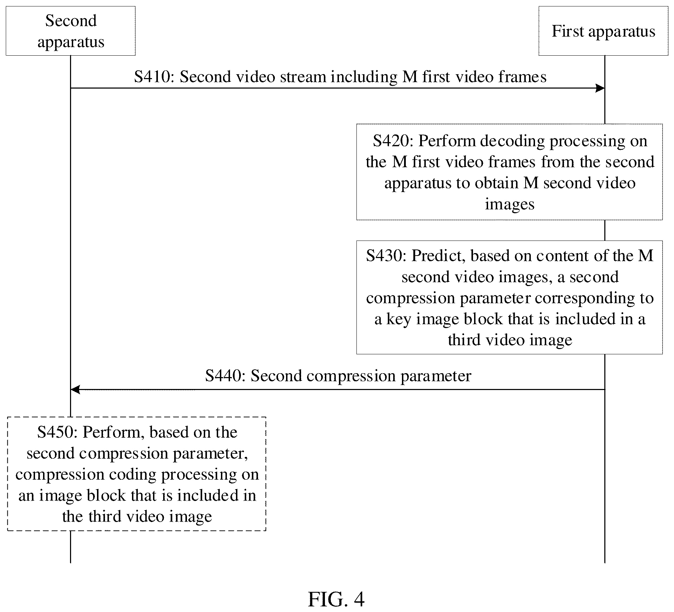

FIG. 4 is a schematic flowchart of a video transmission method according to an embodiment of this application. As shown in FIG. 4, the method may include the following steps.

S410: A second apparatus sends a second video stream to a first apparatus. Accordingly, the first apparatus receives the second video stream from the second apparatus. Specifically, for example, a first transmission module of the second apparatus sends the second video stream to a second transmission module of the first apparatus. Accordingly, the second transmission module of the first apparatus receives the second video stream from the first transmission module of the second apparatus.

The second video stream may include a plurality of (for example, M) first video frames. The first video frame is obtained through compression coding processing that is performed, based on a first compression parameter, by an encoding module of the first apparatus on a first video image. The first video image belongs to a first video stream. The first video stream may be obtained through a video capture module (for example, a camera) of the first apparatus.

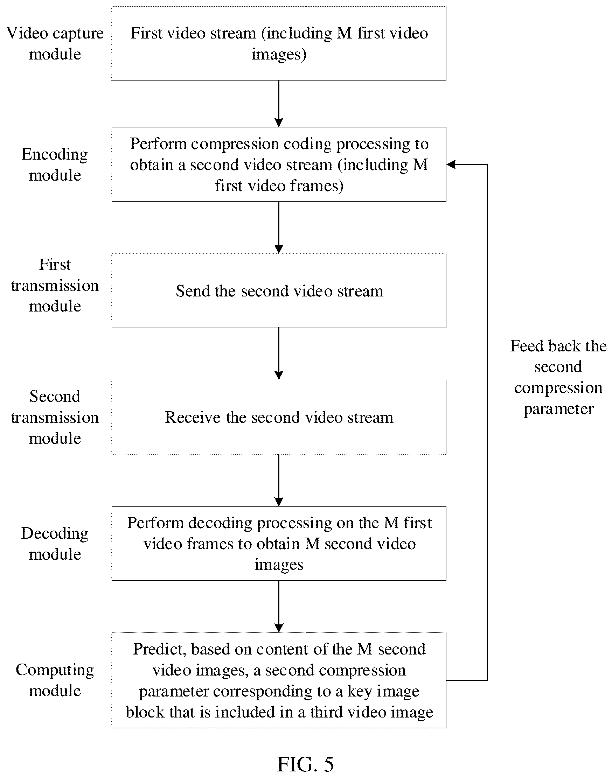

Specifically, as shown in FIG. 5, before S410 is performed, the video capture module of the second apparatus may photograph the first video stream in real time, where the first video stream may include a plurality of first video images. The video capture module may provide the first video stream for the encoding module. The encoding module may perform, based on the first compression parameter, compression coding processing on M first video images that are included in the first video stream, to obtain the second video stream, where the second video stream includes the M first video frames. The encoding module may provide the second video stream for the first transmission module. When S410 is performed, the first transmission module may send the second video stream to the second transmission module of the first apparatus.

It is worth noting that, in this embodiment of this application, the first compression parameter may be an initial compression parameter of the encoding module; and may be a video compression technology that matches the encoding module when the encoding module is delivered from a factory, and is set in an encoding algorithm of the encoding module. Alternatively, the first compression parameter may be obtained by adaptively adjusting, by the encoding module, a compression parameter of the encoding module according to details of communication interaction between the first transmission module and the second transmission module before S410 is performed. A manner of obtaining the first compression parameter is not limited in this embodiment of this application.

For example, the encoding module uses the video compression technology H.265/HEVC described previously. In a process of performing compression coding processing on the M first video images that are included in the first video stream, the encoding module first divides a video into several sequences, where one sequence is divided into several groups of pictures (groups of pictures, GOPs), and each GOP represents a group of consecutive video frames. When performing predictive encoding and transform encoding on the first video image by using an H.265/HEVC algorithm, the encoding module first splits the video image, where a splitting manner may be a quadtree.

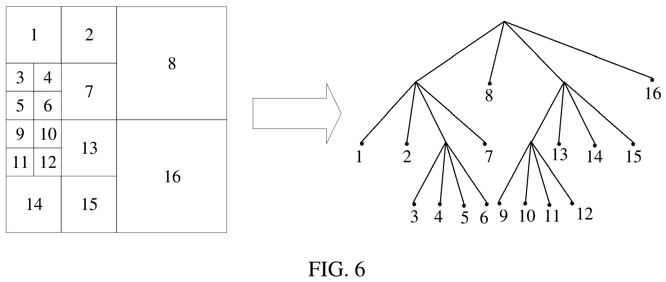

As shown in FIG. 6, during splitting in the quadtree manner, the entire video image is split into several square coding tree blocks (coding tree blocks, CTBs). The CTB may be further split into coding blocks (coding blocks, CBs). The CB may be further split into a prediction block (prediction block, PB) and a transform block (transform block, TB). One luminance CB and two chroma CBs at a same location, together with some corresponding syntax elements, form one coding unit (coding unit, CU). The CU is a unit that determines to perform intraprediction, inter-prediction, and a Skip/Merge mode. One luminance CTB and two chroma CTBs at a same location, together with some corresponding syntax elements and included CUs, form one coding tree unit (coding tree unit, CTU). A size of the CTU may be defined by the encoding module, and a maximum size of 64x64 and a minimum size of 16x16 may be supported.

When a CTU is encoded, CU encoding is performed in a depth-first (for example, from bottom to top) order. Like a quadtree in a data structure, a large block represents a parent node, and four small blocks in the large block represent four child nodes. A process of performing compression coding processing on different CUs may include: performing predictive encoding on the CU, generating a residual in a frame, and performing motion estimation and motion compensation in inter-prediction; transforming the residual, and quantizing and scanning a transform coefficient; and performing entropy encoding on a quantized transform coefficient, motion information, prediction information, and the like to form a compressed video bit stream for output. In H.265/HEVC, non-linear scalar quantization may be used, and a quantization step (namely, a size of a region that is obtained through splitting) of each coding block is controlled through a quantization parameter (quantization parameter, QP). A larger quantization step indicates coarser quantization, a corresponding lower video bit rate, and greater distortion. A smaller quantization step indicates finer quantization, a corresponding higher video bit rate, and less distortion.

In this embodiment of this application, the first compression parameter may include different QPs allocated to different CUs, so that the encoding module performs bit rate control on the CUs separately. Accordingly, during subsequent adjustment of the compression parameter, compression parameters corresponding to different CUs are also separately adjusted, so that the encoding module performs bit rate control on the CUs separately.

S420: The first apparatus performs decoding processing on the M first video frames from the second apparatus to obtain M second video images, where M is an integer greater than or equal to 1.

Specifically, for example, a decoding module of the first apparatus may obtain, from the second transmission module, the M first video frames from the second apparatus, and perform decoding processing on the obtained M first video frames by using a preset decoding algorithm (for example, H.265/HEVC), to obtain the M second video images. The decoding module may provide the M second video images for a computing module.

S430: The first apparatus predicts, based on content of the M second video images, a second compression parameter corresponding to a key image block that is included in a third video image, where capture time of the third video image is later than capture time of the first video image.

During specific implementation of S430, the computing module of the first apparatus may determine, in an inverse selection manner, a first image block from image blocks that are included in the M second video images; and predict, based on content of the first image block, the second compression parameter corresponding to the key image block that is included in the third video image.

For example, an autonomous driving scenario is used as an example. In the scenario, an environmental image captured through an image sensor mainly includes an image of an environment around a road on which a vehicle is located. The environmental image usually includes but is not limited to: the sky, a tree, a building, another vehicle (for example, another vehicle for short), a traffic facility (for example, a traffic signal light or a traffic sign), and the like. The sky, the tree, the building, and the like occupy a large area (about 50%) of the image. Features are easy to extract, and recognition accuracy is high. In addition, these objects have low impact on criticality of an autonomous driving task of the vehicle.

Therefore, when S430 is performed in the autonomous driving scenario, the computing module of the first apparatus may determine a second image block from the image blocks that are included in the M second video images, and use an image block other than the second image block in the M second video images as the first image block. A first value corresponding to the second image block is greater than or equal to a first threshold (for example, 90%), and a second value corresponding to the first image block is less than or equal to a second threshold (for example, 30%). The first value represents a degree of credibility of accurately identifying an object in the first image block, and the second value represents a degree of impact of the object in the first image block on safe driving of the vehicle.

In this way, for a scenario in which all categories that deserve attention cannot be exhaustively enumerated and it is difficult to directly use a region that deserves attention as a label, the inverse selection manner is used. A region that is easy to detect with low attention, such as the sky, the tree, or the building, in the video image may be first identified. Then inverse selection is performed to determine a salient region (or referred to as a key image block) in the video image, thereby improving detection precision of the salient region and avoiding the problem that it is difficult to exhaustively enumerate and extract a plurality of categories of features.

The computing module may be configured with a first neural network model. The computing module may provide the first image block as input information for the first neural network model; and predict, through the first neural network model, the second compression parameter corresponding to the key image block that is included in the future third video image.

For example, the first neural network model may output a score of each normalized image block, where the score may be used as a weighting factor. The computing module may compute, for each image block, network bandwidth corresponding to the image block with reference to currently available network bandwidth between the first apparatus and the second apparatus and weighting factors of the different image blocks. The computing module may compute, by using the network bandwidth corresponding to each image block, a second compression parameter corresponding to each image block.

To ensure that the finally obtained second compression parameter is more adaptable to a condition of a wireless communication channel between the first apparatus and the second apparatus, in an optional implementation, the computing module may provide the first image block and the information about the wireless communication channel between the second apparatus and the first apparatus as input information for the first neural network model; and predict, through the first neural network model, the second compression parameter corresponding to the key image block that is included in the third video image. In this way, the second compression parameter may be associated with a key indicator of the first image block and the channel condition, thereby ensuring quality of a video transmitted between the first apparatus and the second apparatus to a maximum extent.

It is worth noting that, in this embodiment of this application, the used first neural network model may be obtained through pre-training. The first neural network model is trained to predict, by using a plurality of consecutive video images (for example, three or more) as input information and using attention to a dynamic target in the image and an attention map (attention map) for the future, an image location of the key image block of the future third video image and the second compression parameter corresponding to the key image block. In addition, in some embodiments, considering a computing speed of the first neural network model and a transmission latency between the first apparatus and the second apparatus, the first neural network model may be further set to output a prediction result after a third value (for example, 0.5 seconds), that is, to predict the second compression parameter corresponding to the key image block of the third video image that is 0.5 seconds later than the current second video image.

In this way, the finally obtained second compression parameter may satisfy a network transmission requirement and a low-latency condition. Therefore, after the encoding module of the second apparatus subsequently performs compression coding on the third video image by using the second compression parameter and transmission is performed, video quality at a receive end can be ensured to a maximum extent.

S440: The first apparatus sends the second compression parameter to the second apparatus.

In an optional implementation, the method may further include S450: The second apparatus performs, based on the second compression parameter, compression coding processing on an image block that is included in the third video image. During specific implementation, reference may be made to the foregoing descriptions of S410 to S430 to perform compression coding processing on the third video image and perform transmission. For implementation details, refer to the foregoing related descriptions. Details are not described herein.

Therefore, in the foregoing method, the key image block is determined at the receive end (for example, the first apparatus) of the video in the inverse selection manner, the key image block of the future third video image is predicted through the first neural network model with reference to the key image blocks of a plurality of continuous video images, and the second compression parameter corresponding to the key image block of the third video image is computed to adjust the compression parameter on the side of the encoding module. In this way, the compression parameter of the video stream to be transmitted between the first apparatus and the second apparatus can adaptively adapt to the condition of the wireless communication channel between the first apparatus and the second apparatus, so that in a video transmission scenario with a high requirement for real-time transmission, an objective of refined compression on the image is attained under a circumstance of satisfying a network transmission requirement and a low-latency condition, thereby ensuring video quality to a maximum extent.

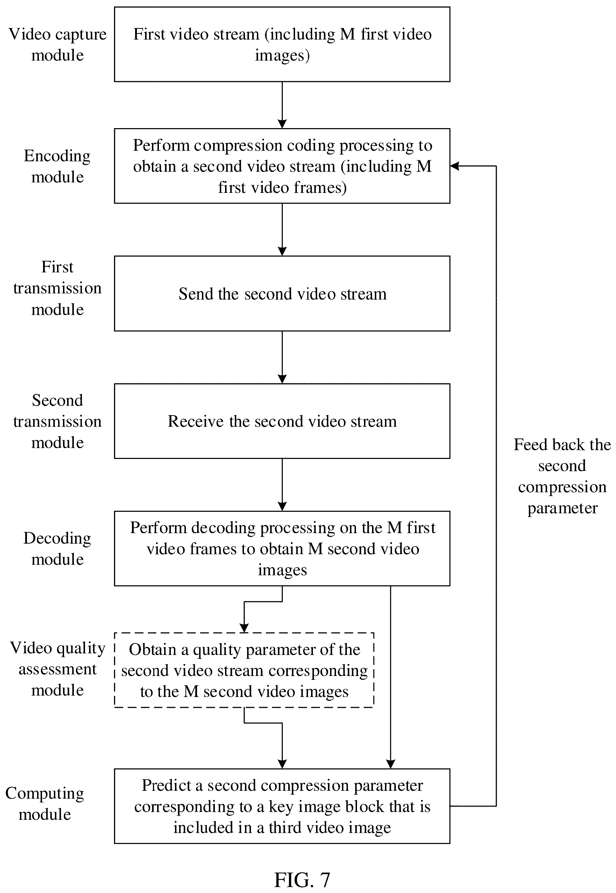

In another optional implementation, to further ensure video quality at the receive end, as shown in FIG. 7, after performing decoding processing on the M first video frames, the decoding module may further provide, for a video quality assessment module, the M second video images that are obtained through decoding. The video quality assessment module may obtain a quality parameter of the second video stream corresponding to the M second video images. Further, the computing module may provide the first image block, the information about the wireless communication channel between the second apparatus and the first apparatus, and the quality parameter of the second video stream as input information for the first neural network model; and predict, through the first neural network model, the second compression parameter corresponding to the key image block that is included in the third video image.

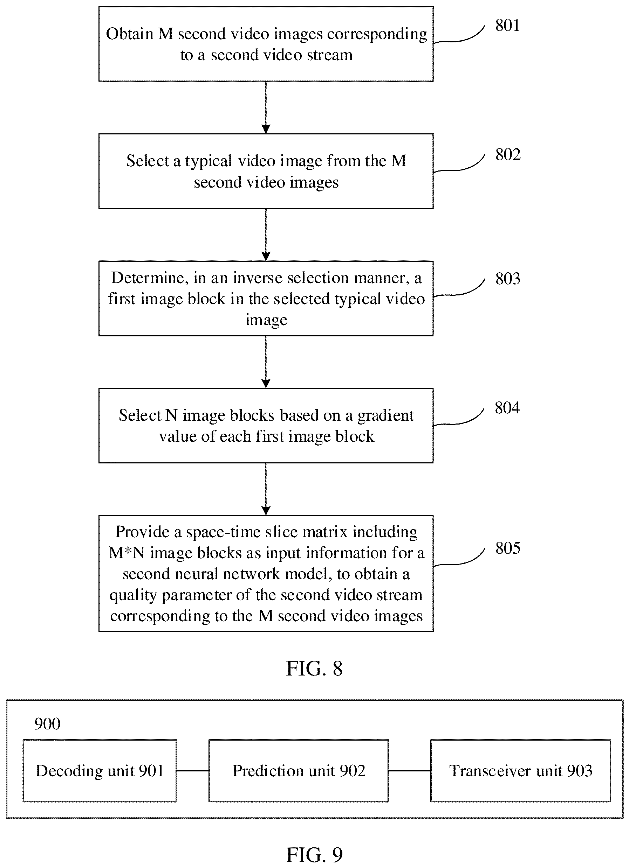

During specific implementation, for example, the video quality assessment module may obtain, through a second neural network model, the quality parameter of the second video stream corresponding to the M second video images. As shown in FIG. 8, a video quality assessment process may specifically include the following steps.

S801: The video quality assessment module may obtain, from the decoding module, the M second video images corresponding to the second video stream.

S802: The video quality assessment module may select a typical video image from the M second video images.

For example, the typical video image may be any one of the M second video images. Alternatively, the typical video image may be a 1^{st} video image, an intermediate image, or a last video image in the M second video images. Alternatively, the video quality assessment module may select a video image in the M second video images by using another customized algorithm. A manner of selecting the typical video image is not limited in embodiments of this application. In some embodiments, for ease of differentiation and description, the typical video image may also be referred to as a fifth video image, and is not distinguished or elaborated in the following description.

S803: The video quality assessment module determines, in an inverse selection manner, a first image block (or referred to as a key image block, a salient region, or the like) in the selected typical video image.

During specific implementation, the video quality assessment module may divide the typical video image into a plurality of (for example, 64*64) image blocks (or referred to as slices), perform salient region detection based on each image block, perform binary classification on each image block, and determine whether the image block includes the sky, a building, a tree, or the like. The inverse selection manner is the same as the inverse selection manner described previously with reference to S430. For detailed implementation, refer to the foregoing related descriptions. Details are not described herein.

Further, the video quality assessment module may re-compute confidence of each image block, and the confidence is represented as p' = 1-p, where p represents confidence of at least one of the sky, the building, the tree, or the like included in the image block.

The video quality assessment module may select, from the typical video image, an image block whose confidence p' is greater than or equal to a specified threshold as the first image block.

S804: The video quality assessment module computes a gradient value of each first image block by using an image edge detection operator, and selects N image blocks based on the gradient value of each first image block.

For example, the image edge detection operator may include a sobel operator. The video quality assessment module may sort the first image blocks based on the gradient values, to obtain N image blocks in an equal difference manner; or select N image blocks whose gradient values are top-ranked, or the like. A manner of selecting the N image blocks is not limited in embodiments of this application.

It should be understood that the image edge detection operator and the gradient value herein are merely examples for describing the manner of selecting the N image blocks, and do not impose any limitation. In another embodiment, the first image blocks may alternatively be sorted and selected based on various algorithms such as definition and color saturation. Details are not described herein.

S805: Obtain, based on locations of the selected N image blocks, N image blocks at same locations in each of the M second video images; provide a space-time slice matrix including M*N image blocks as input information for the second neural network model; and obtain, through the second neural network model, the quality parameter of the second video stream corresponding to the M second video images.

Therefore, different from a conventional method of generating a saliency map (saliency map) by using an image, the video quality assessment module divides a video image into slices, performs inverse selection on each slice to obtain a saliency map at a slice granularity, and performs inverse selection on the saliency map to obtain an image block that really deserves attention. This method can improve detection precision of the salient region, and can avoid the problem that it is difficult to exhaustively enumerate and extract a plurality of categories of features. Further, the concerned image blocks are sorted based on the gradient values, and the locations of the N image blocks are selected, so that the image blocks at the same locations from the M second video images are selected to obtain the M*N space-time slices to obtain the quality parameter of the video stream, thereby avoiding edge feature extraction of an unnecessary image block and helping improve detection precision.

The video transmission method in embodiments of this application has been described in detail with reference to FIG. 4 to FIG. 8. According to the foregoing method, compression parameters of different image blocks may be computed at the receive end with reference to the information about the wireless communication channel between the first apparatus and the second apparatus, to adaptively adjust a compression bit rate at the transmit end, to obtain a smooth video stream. In addition, the video quality is more suitable for a video transmission scenario with a high requirement for real-time transmission, such as autonomous driving. When the salient region of the image is computed, computing and selection are performed in the inverse selection manner, thereby improving detection precision of the salient region and avoiding the problem that it is difficult to exhaustively enumerate and extract a plurality of categories of features. Region-based (or referred to as block-based) processing is performed on the same video image, and different compression parameters are computed for different regions. In this way, an amount of computing of the neural network model and an amount of required storage can be reduced. In addition, the video transmission method in embodiments of this application is more appropriate and intuitive, to better satisfy a requirement for real-time transmission.

An embodiment of this application further provides a communication apparatus (or referred to as a video transmission apparatus), configured to perform the method performed by the first apparatus or the second apparatus in the foregoing method embodiments. For related features, refer to the foregoing method embodiments. Details are not described herein.

As shown in FIG. 9, a communication apparatus 900 may include: a decoding unit 901, configured to perform decoding processing on M first video frames from a second apparatus to obtain M second video images, where the first video frame is obtained through compression coding processing on a first video image based on a first compression parameter, the first video image belongs to a first video stream, and M is an integer greater than or equal to 1; a prediction unit 902, configured to predict, based on content of the M second video images, a second compression parameter corresponding to a key image block that is included in a third video image, where capture time of the third video image is later than capture time of the first video image; and a transceiver unit 903, configured to send the second compression parameter to the second apparatus, where the second compression parameter is used to perform compression coding processing on an image block that is included in the third video image. For a specific implementation, refer to the method steps implemented by the first apparatus in the foregoing method embodiments. Details are not described herein.

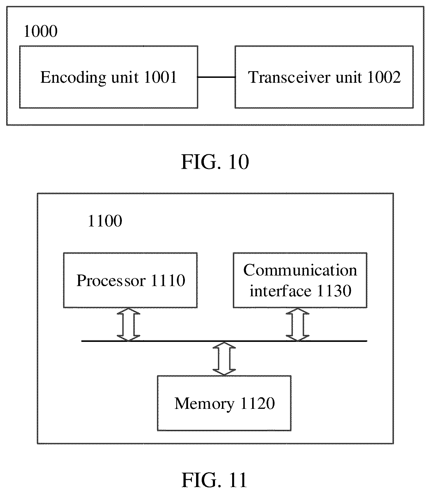

As shown in FIG. 10, a communication apparatus 1000 may include: an encoding unit 1001, configured to perform, based on a first compression parameter, compression coding processing on M first video images that are included in a first video stream, to obtain a second video stream, where the second video stream includes M first video frames; and a transceiver unit 1002, configured to send the second video stream to a first apparatus; and receive a second compression parameter from the second apparatus, where the second compression parameter is used to perform compression coding processing on an image block that is included in a third video image, and capture time of the third video image is later than capture time of the first video image. For a specific implementation, refer to the method steps implemented by the second apparatus in the foregoing method embodiments. Details are not described herein.

It should be understood that division into the units of the foregoing apparatus is merely logical function division. During actual implementation, all or some of the units may be integrated into one physical entity, or may be physically separated. In addition, the units in the apparatus may be implemented in a form of software invoked by a processor. For example, the apparatus includes a processor. The processor is connected to a memory. The memory stores instructions. The processor invokes the instructions stored in the memory, to implement any one of the foregoing methods or implement functions of each unit of the apparatus. The processor is, for example, a general-purpose processor, for example, a central processing unit (central processing unit, CPU) or a microprocessor. The memory is a memory inside the apparatus or a memory outside the apparatus. Alternatively, the units in the apparatus may be implemented in a form of hardware circuits, and functions of some or all units may be implemented by designing the hardware circuits. The hardware circuits may be understood as one or more processors. For example, in an implementation, the hardware circuit is an application-specific integrated circuit (application-specific integrated circuit, ASIC), and the functions of some or all of the foregoing units are implemented by designing a logical relationship between elements in the circuit. For another example, in another implementation, the hardware circuit may be implemented by using a programmable logic device (programmable logic device, PLD). A field programmable gate array (field programmable gate array, FPGA) is used as an example, and the field programmable gate array may include a large quantity of logic gate circuits. A configuration file is used to configure a connection relationship between the logic gate circuits, to implement functions of some or all of the foregoing units. All of the units of the foregoing apparatus may be implemented in a form of software invoked by the processor; or all of the units may be implemented in a form of the hardware circuits; or some of the units may be implemented in a form of software invoked by the processor, and a remaining part may be implemented in a form of the hardware circuits.

In embodiments of this application, the processor is a circuit having a signal processing capability. In an implementation, the processor may be a circuit having an instruction reading and running capability, for example, a CPU, a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing Unit, NPU), a tensor processing unit (tensor processing unit, TPU), or a deep-learning processing unit (deep-learning processing unit, DPU).

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the apparatus may be integrated, or may be implemented independently. In an implementation, these units are integrated together and implemented in a form of a system-on-a-chip (system-on-a-chip, SoC). The SoC may include at least one processor, configured to implement any one of the foregoing methods or implement the functions of the units of the apparatus. Types of the at least one processor may be different. For example, the at least one processor includes a CPU and an FPGA, a CPU and an artificial intelligence processor, or a CPU and a GPU.

In a simple embodiment, a person skilled in the art may figure out that the communication apparatuses in the foregoing embodiments each may be in a form shown in FIG. 11.

An apparatus 1100 shown in FIG. 11 includes at least one processor 1110 and a communication interface 1130. In an optional design, a memory 1120 may be further included.

A specific connection medium between the processor 1110 and the memory 1120 is not limited in this embodiment of this application.

In the apparatus shown in FIG. 11, when communicating with another device, the processor 1110 may perform data transmission via the communication interface 1130.

When the communication apparatus is in the form shown in FIG. 11, the processor 1110 in FIG. 11 may invoke computer-executable instructions stored in the memory 1120, so that the apparatus 1100 can perform any one of the foregoing method embodiments.

An embodiment of this application further relates to a chip system. The chip system includes a processor, configured to invoke a computer program or computer instructions stored in a memory, so that the processor performs the method according to any one of the foregoing embodiments.

In a possible implementation, the processor is coupled to the memory via an interface.

In a possible implementation, alternatively, the chip system may directly include a memory, where the memory stores the computer program or the computer instructions.

For example, the memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. Through illustrative but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct Rambus dynamic random access memory (direct Rambus RAM, DR RAM).

An embodiment of this application further relates to a processor. The processor is configured to invoke a computer program or computer instructions stored in a memory, so that the processor performs the method according to any one of the foregoing embodiments.

In an example, in this embodiment of this application, the processor is an integrated circuit chip, and has a signal processing capability. For example, the processor may be an FPGA, may be a general-purpose processor, a DSP, an ASIC, or another programmable logic device, a discrete gate or transistor logic device, or a discrete hardware component; or may be a system-on-chip (system-on-chip, SoC); or may be a CPU; or may be a network processor (network processor, NP); or may be a microcontroller unit (microcontroller unit, MCU); or may be a PLD, or another integrated chip; and can implement or perform the methods, steps, and logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It should be understood that embodiments of this application may be provided as a method, a system, or a computer program product.

In a possible implementation, an embodiment of this application provides a computer-readable storage medium. The computer-readable storage medium stores program code. When the program code is run on a computer, the computer is enabled to perform the foregoing method embodiments.

In a possible implementation, an embodiment of this application provides a computer program product. When the computer program product is run on a computer, the computer is enabled to perform the foregoing method embodiments.

Therefore, this application may use a form of hardware-only embodiments, softwareonly embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

These computer program instructions may be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto the computer or another programmable data processing device, so that a series of operations and steps are performed on the computer or the another programmable device, to generate computerimplemented processing. Therefore, the instructions executed on the computer or the another programmable device provide steps for implementing a specific function in one or more processes in the flowcharts and/or in one or more blocks in the block diagrams.

It is clear that a person skilled in the art may make various modifications and variations to embodiments of this application without departing from the scope of embodiments of this application. This application is intended to cover the modifications and variations to embodiments of this application provided that these modifications and variations fall within the scope defined by the claims of this application and their equivalent technologies. In embodiments of this application, unless otherwise stated or there is a logic conflict, terms and/or descriptions between embodiments are consistent and may be mutually referenced, and technical features in different embodiments may be combined based on an internal logical relationship thereof, to form a new embodiment.

## Claims

1. A video transmission method, applied to a first apparatus, wherein the method comprises:
performing decoding processing on M first video frames from a second apparatus to obtain M second video images, wherein the first video frame is obtained through compression coding processing on a first video image based on a first compression parameter, the first video image belongs to a first video stream, and M is an integer greater than or equal to 1;
predicting, based on content of the M second video images, a second compression parameter corresponding to a key image block that is comprised in a third video image, wherein capture time of the third video image is later than capture time of the first video image; and
sending the second compression parameter to the second apparatus, wherein the second compression parameter is used to perform compression coding processing on an image block that is comprised in the third video image.

2. The method according to claim 1, wherein predicting, based on the content of the M second video images, the second compression parameter corresponding to the key image block that is comprised in the third video image comprises:
determining, in an inverse selection manner, a first image block from image blocks that are comprised in the M second video images; and
predicting, based on content of the first image block, the second compression parameter corresponding to the key image block that is comprised in the third video image.

3. The method according to claim 2, wherein determining, in the inverse selection manner, the first image block from the image blocks that are comprised in the M second video images comprises:
determining a second image block from the image blocks that are comprised in the M second video images, wherein a first value corresponding to the second image block is greater than or equal to a first threshold, a second value corresponding to the first image block is less than or equal to a second threshold, the first value represents credibility of accurately identifying an object in the first image block, and the second value represents a degree of impact of the object in the first image block on safe driving of a vehicle; and
using an image block other than the second image block in the M second video images as the first image block.

4. The method according to claim 2 or 3, wherein predicting, based on the first image block, the second compression parameter corresponding to the key image block that is comprised in the third video image comprises:
providing the first image block as input information for a first neural network model; and predicting, through the first neural network model, the second compression parameter corresponding to the key image block that is comprised in the third video image.

5. The method according to claim 4, wherein predicting, based on the first image block, the second compression parameter corresponding to the key image block that is comprised in the third video image comprises:
providing the first image block and information about a wireless communication channel between the second apparatus and the first apparatus as input information for the first neural network model; and predicting, through the first neural network model, the second compression parameter corresponding to the key image block that is comprised in the third video image.

6. The method according to claim 4 or 5, wherein the method further comprises:
obtaining, through a second neural network model, a quality parameter of a second video stream corresponding to the M second video images; and
predicting, based on the first image block, the second compression parameter corresponding to the key image block that is comprised in the third video image comprises:
providing the first image block, the information about the wireless communication channel between the second apparatus and the first apparatus, and the quality parameter of the second video stream as input information for the first neural network model; and predicting, through the first neural network model, the second compression parameter corresponding to the key image block that is comprised in the third video image.

7. The method according to claim 6, wherein obtaining, through the second neural network model, the quality parameter of the second video stream corresponding to the M second video images comprises:
selecting N image blocks from each second video image based on a gradient value of each first image block in the M second video images; and
providing a space-time slice matrix comprising M*N image blocks as input information for the second neural network model, to obtain the quality parameter of the second video stream corresponding to the M second video images.

8. The method according to claim 7, wherein the method further comprises:
computing the gradient value of each first image block in the M second video images by using an image edge detection operator.

9. The method according to any one of claims 1 to 8, wherein the second apparatus comprises an in-vehicle camera apparatus, and the first apparatus comprises an autonomous driving system.

10. A video transmission method, applied to a second apparatus, wherein the method comprises:
performing, based on a first compression parameter, compression coding processing on M first video images that are comprised in a first video stream, to obtain a second video stream, wherein the second video stream comprises M first video frames;
sending the second video stream to a first apparatus; and
receiving a second compression parameter from the second apparatus, wherein the second compression parameter is used to perform compression coding processing on an image block that is comprised in a third video image, and capture time of the third video image is later than capture time of the first video image.

11. The method according to claim 10, wherein the method further comprises:
performing, based on the second compression parameter, compression coding processing on the image block that is comprised in the third video image to obtain a fourth video stream; and
sending the fourth video stream to the first apparatus.

12. A video transmission apparatus, comprising:
a decoding unit, configured to perform decoding processing on M first video frames from a second apparatus to obtain M second video images, wherein the first video frame is obtained through compression coding processing on a first video image based on a first compression parameter, the first video image belongs to a first video stream, and M is an integer greater than or equal to 1;
a prediction unit, configured to predict, based on content of the M second video images, a second compression parameter corresponding to a key image block that is comprised in a third video image, wherein capture time of the third video image is later than capture time of the first video image; and
a transceiver unit, configured to send the second compression parameter to the second apparatus, wherein the second compression parameter is used to perform compression coding processing on an image block that is comprised in the third video image.

13. A video transmission apparatus, comprising:
an encoding unit, configured to perform, based on a first compression parameter, compression coding processing on M first video images that are comprised in a first video stream, to obtain a second video stream, wherein the second video stream comprises M first video frames; and
a transceiver unit, configured to send the second video stream to a first apparatus; and receive a second compression parameter from the second apparatus, wherein the second compression parameter is used to perform compression coding processing on an image block that is comprised in a third video image, and capture time of the third video image is later than capture time of the first video image.

14. A communication apparatus, comprising at least one processor and an interface circuit, wherein the interface circuit is configured to provide data or code instructions for the at least one processor, and the at least one processor is configured to implement the video transmission method according to any one of claims 1 to 9 or the video transmission method according to either of claim 10 or 11 by using a logic circuit or by executing the code instructions.

15. A video transmission system, comprising:
a video transmission apparatus configured to implement the method according to any one of claims 1 to 9; and
a video transmission apparatus configured to implement the method according to either of claim 10 or 11.

16. A computer-readable storage medium, storing computer executable instructions, wherein the computer executable instructions cause a computer to perform the method according to any one of claims 1 to 9 or perform the method according to either of claim 10 or 11.

17. A computer program product, comprising computer executable instructions, wherein the computer executable instructions cause a computer to perform the method according to any one of claims 1 to 9 or perform the method according to either of claim 10 or 11.
